# EUROPÄISCHE PATENTSCHRIFT

(11) **EP 2 415 639 B1**
(45) Veröffentlichungstag und Bekanntmachung des Hinweises auf die Patenterteilung: **05.08.2015**
(21) Anmeldenummer: 11174840.6
(22) Anmeldetag: 21.07.2011
(51) Int. Cl.: B60Q 3/02, B29C 39/00, B60Q 3/00, G02B 6/00, F21V 8/00, B60R 13/02

(54) **Verkleidungseinrichtung für ein Kraftfahrzeug mit integriertem Beleuchtungssystem und Herstellungsverfahren**
Trim panel device for a motor vehicle with integrated lighting system and manufacturing method
Dispositif de panneau d'habillage pour véhicule automobile avec système d'éclairage intégré et procédé de fabrication

(30) Priorität: 02.08.2010 DE 102010036795
(43) Veröffentlichungstag der Anmeldung: 08.02.2012
(73) Patentinhaber: International Automotive Components Group GmbH, 40472 Düsseldorf (DE)
(72) Erfinder: Cannon, Carter Scott, 40472 Düsseldorf (DE); Behnke, Michael, 40472 Düsseldorf (DE); Christochowitz, Daniel, 44809 Bochum (DE); Mauritz, Christian, 70771 Leinfelden (DE); Müller, Carsten, 71711 Steinheim (DE)
(74) Vertreter: Liesegang, Eva

(56) Entgegenhaltungen:
- EP-A1- 0 979 760
- EP-A1- 1 418 090
- WO-A1-01/94155
- US-A1- 2005 007 759
- US-A1- 2010 214 795

## Beschreibung

Die Erfindung betrifft eine Verkleidungseinrichtung für ein Kraftfahrzeug mit integriertem Beleuchtungssystem und ein Verfahren zu deren Herstellung.

Die DE 102 60 831 B3 beschreibt ein Beleuchtungssystem für Anzeigen von Fahrzeugen mit einem im wesentlichen flächigen Träger, auf den LEDs als Lichtquellen aufgesetzt sind. Zwischen den LEDs befinden sich Elektrolumineszenzfolien, die im wesentlichen die gesamte Oberfläche des Trägers abdecken. Über der Anordnung aus Träger und Beleuchtungssystem ist eine Abdeckung aufgebracht, welche die Sichtseite bildet und auf die Symbole aufgedruckt sind. Zwischen der Abdeckung und dem Träger liegt ferner ein Distanzplättchen mit Aussparungen, die den Bereichen entsprechen, an denen an der Abdeckung die Symbole vorgesehen sind. Das Beleuchtungssystem stellt Anzeigen in einem Kraftfahrzeug bereit.

Ferner ist es bekannt, in Kraftfahrzeugen eine Hintergrund- oder Flächenbeleuchtung zwischen den Träger und die Abdeckung eines Verkleidungsteils zu integrieren. Die US 6 464 381 B2 und die US 6 773 129 B2 beschreiben z.B. eine Innenbeleuchtung für ein Fahrzeug, bei der eine Elektrolumineszenzplatte zwischen einen Träger und einer Deckschicht eingefügt ist. Um zu verhindern, dass die Deckschicht im Bereich der Elektrolumineszenzplatte ausbaucht, kann in der Deckschicht oder in dem Träger eine Aussparung vorgesehen sein, in der die Elektrolumineszenzplatte aufgenommen wird. Die Aussparung ist tiefer als die Dicke der Elektrolumineszenzplatte, so dass der Aufbau insgesamt diskontinuierlich wird. Weitere Einzelheiten des Aufbaus sind nicht beschrieben.

Die US 7 150 550 B2 und die US 7 287 885 B2 beschreiben Elektrolumineszenz (EL)-Beleuchtungen für Staufächer eines Kraftfahrzeuges, wobei eine EL-Leuchte in eine Gehäusewand des Ablagefachs eingeformt wird und an deren Oberfläche zu liegen kommt.

Die DE 10 2005 005 682 A1 und die DE 10 2006 012 606 A1 beschreiben beleuchtbare Innenverkleidungsteile für Kraftfahrzeuge mit einem Träger, einer flächigen Lichtquelle und einer Deckschicht, die für das Licht der Lichtquelle durchlässig ist. Als Lichtquellen kommen LEDs und Leuchtfolien in Frage. Die Oberflächenschicht kann beliebige Formen, Symbole, Schriftzüge etc. tragen. Die Deckschicht kann eine Gewebeschicht sein.

Die EP 2 060 444 B1 beschreibt ein beleuchtbares Innenverkleidungsteil für ein Kraftfahrzeug, in dem lumineszierendes Material in Form von lumineszierenden Partikeln in einen Träger integriert ist oder in Form einer Lumineszenzschicht zwischen einem Träger und einer Deckschicht eingefügt ist. Als Lichtquelle dient ein LED-Band.

Die WO02/061380 A2 beschreibt eine Hintergrundbeleuchtung für ein Kraftfahrzeug mit einem Träger, der einen Durchbruch aufweist, durch den eine LED hindurchgeführt ist. Über dem Träger liegt eine zweilagige Deckschicht aus einem Schaummaterial und einem Deckmaterial. Das Schaummaterial weist ebenfalls eine Aussparung zur Aufnahme der LED auf, und das Deckmaterial ist perforiert, so dass das Licht der LED auf die Sichtseite des Verkleidungsteils durchdringen kann. Die Struktur aus Träger und Leuchte ist diskontinuierlich.

Die EP 1 418 090 A1 beschreibt einen Dachhimmel mit integrierten Elektro-Lumineszenzstreifen, die entweder auf einem Träger des Dachhimmels aufliegen oder in diesen eingebettet sind. Ein Kabel zum Anschluss des Elektro-Lumineszenzstreifens an einen Verbinder ist durch einen Durchbruch in dem Träger geführt.

Die EP 0 979 760 beschreibt ebenfalls einen Dachhimmel für ein Kraftfahrzeug, wobei in den Träger des Dachhimmels Vertiefungen eingeformt sind, um verschiedene Funktionen, wie elektrische Leitungen, Lampensockel, elektrische Verbindung, flache Lautsprecher etc. aufzunehmen.

Die oben beschriebenen Beleuchtungssysteme sind im Stand der Technik auch als "hidden until lit"-Beleuchtungssysteme bekannt. Sie dienen sowohl als Hintergrundbeleuchtung als auch zur Beleuchtung von dekorativen Elementen und Anzeigen. Dabei soll für den Passagier eines Kraftfahrzeuges nicht erkennbar sein, dass sich in dem Verkleidungsteil eine Lichtquelle oder Anzeige befindet, solange diese nicht eingeschaltet ist. Im ausgeschalteten Zustand soll also das Verkleidungsteil ein unauffälliges kontinuierliches Erscheinungsbild haben. Dabei besteht im Stand der Technik das Problem, dass aufgrund von Perforationen der Deckschicht oder Ein- oder Ausbuchtungen der Deckschicht im Bereich der Lichtquelle Diskontinuitäten im Erscheinungsbild des Verkleidungsteils entstehen, welche das Beleuchtungssystem "verraten".

Es ist somit eine Aufgabe der Erfindung, eine Verkleidungseinrichtung für ein Kraftfahrzeug mit integriertem Beleuchtungssystem und ein Verfahren zu deren Herstellung anzugeben, welche die genannten Probleme vermeidet. Ziel ist es, dass die Verkleidungseinrichtung für den Passagier eines Kraftfahrzeuges nicht wahrnehmbar ist, solange das Beleuchtungssystem nicht aktiv ist. Ferner soll die erfindungsgemäße Verkleidungseinrichtung einfach aufgebaut und kostengünstig herzustellen sein.

Diese Aufgabe wird durch eine Verkleidungseinrichtung mit den Merkmalen von Patentanspruch 1 sowie durch Verfahren gemäß den Patentansprüchen 9 und 10 und durch eine Verwendung gemäß Anspruch 13 gelöst. Bevorzugte Ausführunggen sind in den abhängigen Ansprüchen angegeben.

Die erfindungsgemäße Verkleidungseinrichtung umfasst einen Träger mit einer B-Seite und einer C-Seite. Der Träger kann aus Kunststoff, insbesondere einem starren Schaumstoff, einem Faser-Verbundwerkstoff oder einem anderen Material bestehen. In die B-Seite des Trägers ist eine Vertiefung eingearbeitet, und der Träger weist einen Durchbruch im Bereich oder in der Nähe des Bodens dieser Vertiefung auf. Vorzugsweise liegt der Durchbruch am Rand der Vertiefung. Eine flächige Beleuchtungseinheit kommt in der Vertiefung auf der B-Seite des Trägers bündig zu liegen, so dass sich auf der B-Seite des Trägers eine kontinuierliche oder im wesentlichen kontinuierliche ebene Oberfläche des Trägers mit der Beleuchtungseinheit ergibt. Die Tiefe der Vertiefung ist somit gleich oder im wesentlichen gleich der Dicke der Beleuchtungseinheit, wobei die Beleuchtungseinheit vorzugsweise plattenförmig ist. Am Rand der Beleuchtungseinheit kann ein kleiner Spalt zur Wand der Vertiefung hin verbleiben; vorzugsweise geht dieser Spalt jedoch gegen Null. Die Beleuchtungseinheit weist ein Anschlusskabel auf, das durch den Durchbruch hindurch zur C-Seite des Trägers geführt wird, wo es mit einem Stecker, einer weiteren Leitung oder direkt mit einer Ansteuereinheit verbunden wird. Eine Deckschicht ist auf die B-Seite des Trägers aufgebracht und überdeckt die flächige Beleuchtungseinheit sowie wenigstens einen Teil der Oberfläche des Trägers. Die Deckschicht bildet die Sichtseite (A-Seite) der Verkleidungseinrichtung und ist durchlässig für das von der Beleuchtungseinheit ausgesandte Licht. Die Deckschicht besteht vorzugsweise aus einer Schaumschicht mit einer Decklage aus einem textilen Gewebe, perforiertem Leder oder Alcantara, Kunststofffolie oder dergleichen und hat eine definierte Lichtdurchlässigkeit von beispielsweise 15% bis 40%.

Die Erfindung schafft ein einfaches, kostengünstiges und kompaktes Beleuchtungssystem, wobei die Beleuchtungseinheit so in den Träger integriert ist, dass die Oberfläche des Trägers kontinuierlich und eben ist, so dass sich das Beleuchtungssystem auf der darüberliegenden Deckschicht nicht abzeichnet. Sämtliche Anschlüsse, Verkabelungen, Ansteuereinheiten und dergleichen für das Beleuchtungssystem können auf der Rückseite (C-Seite) des Trägers vorgesehen sein und sind damit vollständig verborgen. Die Verkabelung und der Anschluss der Beleuchtungseinheit an die Bordelektronik des Kraftfahrzeuges kann nach der vollständigen Fertigstellung der Verkleidungseinrichtung und auch nach dem Auflaminieren der Deckschicht erfolgen.

In ihrer bevorzugten Ausführungsform umfasst die Beleuchtungseinheit wenigstens eine punktförmige Lichtquelle, z.B. eine LED, insbesondere eine SMD-LED (Licht emittierende Diode als Oberflächen-montierbares Bauteil), und einen flächigen Lichtleiter, z.B. eine transparente Kunststofffolie, beispielsweise aus Acryl. Vorzugsweise werden ultra-dünne Kunststofffolien mit einer Dicke von weniger als 1 mm und vorzugsweise nicht mehr als etwa 0,3 mm verwendet. Der gesamte Aufbau der Beleuchtungseinheit kann eine Dicke im Bereich von etwa 0,6 mm bis 3 mm, z.B. ungefähr 1,2 mm haben. Dies erlaubt es, die Beleuchtungseinheit problemlos im Träger unterzubringen und die Verkleidungseinrichtung für die Hintergrundbeleuchtung oder Raumbeleuchtung in einem Kraftfahrzeug einzusetzen. Die Beleuchtungseinheit verursacht keine nennenswerte Wärmeentwicklung und kann so eingestellt werden, dass sie als Hintergrundbeleuchtung dauerhaft aktiv ist. Sie kann auch gezielt als Raumbeleuchtung oder Beleuchtung von Anzeigen, dekorativen Elementen und dergleichen ein- und ausschaltbar sein. Die Leistungsaufnahme liegt z. B. bei einer Versorgungsspannung von 12 Volt bei etwa 2 Watt. Dies ist unter anderem abhängig von der Anzahl der Lichtquellen.

In der bevorzugten Ausführungsform der Erfindung ist die Beleuchtungseinheit wenigstens teilweise auf einer gedruckten Schaltungsplatte angeordnet. Bei Verwendung einer LED können diese sowie möglicherweise weitere zugeordnete Schaltungsbauteile, wie Widerstände, und Leitungen auf die Schaltungsplatte aufgebracht bzw. aufgedruckt sein. Erfindungsgemäß ist es auch möglich, einen Reflektor auf die Schaltungsplatte zu drucken, der mit dem Lichtleiter zusammenwirkt. Die erfindungsgemäße Beleuchtungseinheit kann darüber hinaus einen oder mehrere Diffusoren und Weichzeichner (Scrim) aufweisen, die auf den Reflektor und/oder den Lichtleiter gedruckt oder auf andere Weise in die Beleuchtungseinheit integriert werden. Die Beleuchtungseinheit kann optional mit einem Harzmaterial oder einem anderen geeigneten Material verkapselt sein, weist darüberhinaus jedoch kein eigenes Gehäuse auf. Das Gehäuse der Beleuchtungseinheit wird nur durch den Träger und die Deckschicht gebildet.

In einer Ausführung der Erfindung ist die Beleuchtungseinheit in die Vertiefung eingeklebt. Dies kann beispielsweise mittels Sprühkleber oder durch Verwendung von Klebefolie erfolgen, die auf den Boden der Vertiefung aufgebracht werden.

In einer Ausführungsform der Erfindung umfasst der Träger mehrere Vertiefungen, in die entsprechende Beleuchtungseinheiten eingebracht sind. Die Beleuchtungseinheiten sind auf der C-Seite des Trägers in Reihe und/oder parallel geschaltet.

Die erfindungsgemäße Verkleidungseinrichtung kann auf verschiedene Weise hergestellt werden. In einer Ausführungsform wird zunächst die Vertiefung in dem Träger durch Pressen in einem Presswerkzeug ausgebildet. Der Träger der Verkleidungseinrichtung wird bei diesem Pressvorgang ausgehend von einem wesentlichen ebenen Rohmaterial in seine endgültige Form gebracht, während gleichzeitig die Vertiefung eingeprägt wird. Das Ausbilden der Vertiefung erfordert somit in der Fertigung keinen zusätzlichen Arbeitsschritt. Im Bereich oder in der Nähe des Bodens der Vertiefung wird in dem Träger ein Durchbruch, beispielsweise durch Stanzen oder Wasserstrahlschneiden, hergestellt. Es ist auch möglich, den Träger mit der Vertiefung und gegebenenfalls dem Durchbruch in der gewünschten Form direkt in einem Spritzgussvorgang oder durch ein anderes Verfahren herzustellen. Anschließend wird das Anschlusskabel durch den Durchbruch von der B-Seite zur C-Seite des Trägers geführt, und die Beleuchtungseinheit wird in die Vertiefung eingebracht. Dadurch entsteht eine Baugruppe aus Träger und Beleuchtungseinheit mit einer ebenen oder im wesentlichen ebenen, kontinuierlichen Oberfläche auf der B-Seite des Trägers. Auf diese Oberfläche wird die Deckschicht aufgebracht, um die Beleuchtungseinheit und wenigstens einen Teil des Trägers abzudecken. Die Beleuchtungseinheit ist mit einem flächigen Lichtleiter und einer oder mehreren Lichtquellen aufgebaut. Es ist auch möglich, zunächst nur den Lichtleiter in die Vertiefung einzubringen, so dass sich eine ebene oder im wesentlichen ebene, kontinuierliche Oberfläche auf der B-Seite des Trägers bildet, Der Lichtleiter und der Träger werden dann mit der Deckschicht abgedeckt. Anschließend kann die Lichtquelle mit ihrem Anschlusskabel von der C-Seite des Trägers durch den Durchbruch hindurch in die Verkleidungseinrichtung eingebracht werden. Der Durchbruch muss dann ausreichend groß sein, um die Lichtquelle aufzunehmen.

In einer alternativen Ausgestaltung der Erfindung wird zunächst, ausgehend von einem ebenen Träger-Rohmaterial, der Durchbruch in dem Träger ausgebildet. Anschließend wird der Lichtleiter auf den Träger aufgebracht.

Der Träger mit dem vormontierten Lichtleiter wird in ein Presswerkzeug eingebracht und derart verformt, dass der Lichtleiter in den Träger gedrückt wird und in der dadurch in dem Träger gebildeten Vertiefung zu liegen kommt. Die konkrete Positionierung des Lichtleiters kann zum Beispiel mithilfe eines magnetischen Einsatzes in dem Presswerkzeug sichergestellt werden. Während des Verformens können auch weitere gewünschte Gestaltungsmerkmale in dem Träger ausgebildet werden. Nach dem Verformen liegt die Beleuchtungseinheit bündig in dem Träger, so dass sich insgesamt eine im wesentlichen kontinuierliche Oberfläche des Trägers ergibt. Auf diese Oberfläche wird die Deckschicht aufgebracht. Anschließend wird noch von der C-Seite des Trägers, durch den Durchbruch hindurch die Lichtquelle mit Anschlusskabel in die Verkleidungseinrichtung eingebracht.

Diese zweite Ausgestaltung des erfindungsgemäßen Verfahrens hat gegenüber der ersten den Vorteil, dass sichergestellt ist, dass die Beleuchtungseinheit bündig in dem Träger zu liegen kommt. Es ergeben sich keine Probleme aufgrund von Toleranzen der Werkzeuge, weil die Beleuchtungseinheit direkt in den Träger eingeformt wird. Andererseits stellt dieses Verfahren eine größere Belastung der Beleuchtungseinheit durch das Presswerkzeug dar. Der Fachmann wird nach den Gegebenheiten das beste Herstellungsverfahren, wie oben beschrieben, oder ein alternatives Verfahren wählen.

Die erfindungsgemäße Verkleidungseinrichtung wird beispielsweise als Dachhimmel in einem Kraftfahrzeug verwendet, sie kann aber auch zur Beleuchtung oder Anzeige in Tür-Innenverkleidungen, im Armaturenbrett, in Ablagefächern, an Sitzen und Polstern oder an anderer Stelle in einem Kraftfahrzeug oder in anderen technischen Bereichen Verwendung finden.

Die Erfindung ist mit Bezug auf die Zeichnungen näher beschrieben, wobei die Verkleidungseinrichtungen von Fig 1-30 nicht den erfindungsgemäßen Durchbruch aufweisen
- Fig. 1: zeigt eine Innenansicht eines Kraftfahrzeuges mit Verkleidungseinrichtungen;
- Fig. 2: zeigt eine isometrische Darstellung eines Trägers einer Verkleidungseinrichtung;
- Fig. 3: zeigt eine isometrische Explosionsdarstellung einer Verkleidungseinrichtung ;
- Fig. 4: zeigt eine Unteransicht der Verkleidungseinrichtung der Fig. 3;
- Fig. 5: zeigt eine schematische Schnittdarstellung durch einen Teil Verkleidungseinrichtung von Fig. 3;
- Fig. 6: zeigt eine weitere schematische Schnittdarstellung durch einen Teil der Verkleidungseinrichtung von Fig. 3;
- Fig. 7: zeigt in isometrischer Darstellung einer Unteransicht eines Teils Verkleidungseinrichtung von Fig. 3;
- Fig. 8: zeigt in isometrischer Darstellung eine Draufsicht auf einen Teil der Verkleidungseinrichtung von Fig. 3 während der Montage;
- Fig. 9A und 9B: zeigen schematische Schnittdarstellungen durch eine Ausführungsform einer Beleuchtungseinheit einer Verkleidungseinrichtung, wobei die Fig. 9B eine Explosionsdarstellung der Fig. 9A ist;
- Fig. 10: zeigt eine Draufsicht auf die Beleuchtungseinheit der Fig. 9A und 9B;
- Fig. 11 bis 22: illustrieren eine Abfolge von Schritten zur Herstellung einer Verkleidungseinrichtung gemäß einer ersten Prozessfolge, wobei Fig. 14 bis 16 alternative Schritte zur Befestigung der Beleuchtungseinheit an dem Träger illustrieren;
- Fig. 23 bis 30: illustrieren eine Abfolge von Schritten zur Herstellung einer Verkleidungseinrichtung gemäß einer zweiten Prozessfolge;
- Fig. 31 bis 43: illustrieren eine Abfolge von Schritten zur Herstellung der erfindungsgemäßen Verkleidungseinrichtung gemäß einer erfindungsgemäßen Prozessfolge; und
- Fig. 44 bis 46: zeigen in isometrischer Darstellung eine Draufsicht auf die erfindungsgemäße Verkleidungseinrichtung während der Montage gemäß der erfindungsgemäß Prozessfolge.

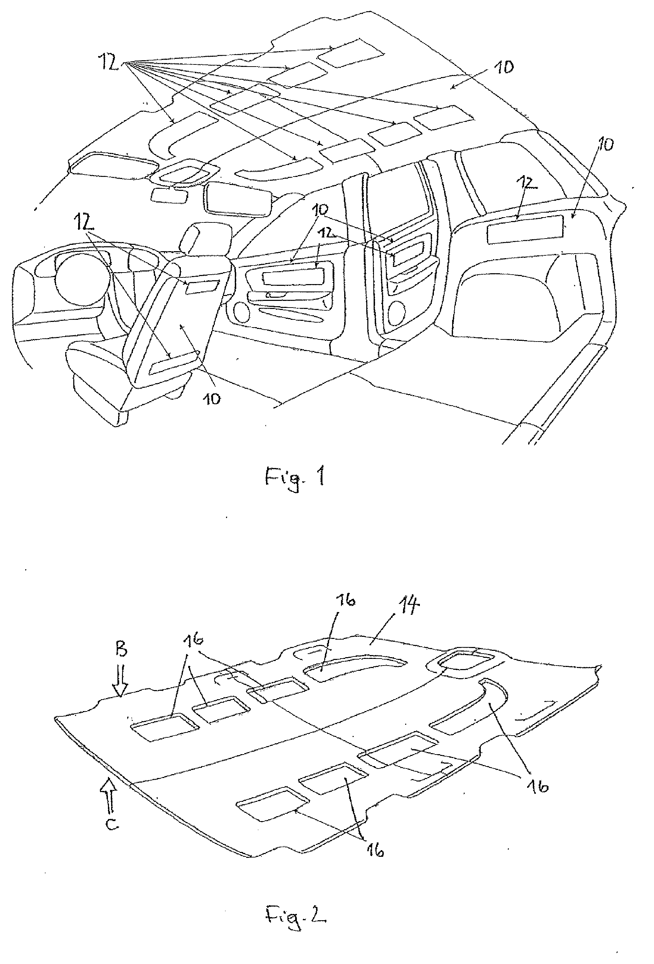

Fig. 1 zeigt eine Innenansicht eines Kraftfahrzeuges, in dem mehrere Verkleidungseinrichtungen 10 für den Dachhimmel, die Innenverkleidung sowie die rückseitige Verkleidung der Frontsitze eingesetzt werden. In die Verkleidungseinrichtung sind Beleuchtungseinheiten 12 integriert, die in Fig. 1 schematisch dargestellt sind. In der Praxis sind die Beleuchtungseinrichtungen 12 an sich im Innenraum des Fahrzeuges nicht sichtbar, weil sie von einer Deckschicht überdeckt sind. Sichtbar sind nur die von den Beleuchtungseinheiten beleuchteten Flächen, sofern die Beleuchtung eingeschaltet ist. Dieses Konzept wird auch als "hidden until lit" bezeichnet.

Fig. 2 zeigt einen Träger 14 der Verkleidungseinrichtung 10, die in Fig. 1 den Dachhimmel bildet. Der Träger 14 weist eine B-Seite (in der Fig. 2 oben) und eine C-Seite (in Fig. 2 unten) auf. Auf der B-Seite sind in dem Träger Vertiefungen 16 zur Aufnahme der Beleuchtungseinheiten ausgebildet. Die Vertiefungen 16 sind bodenseitig geschlossen, also bis auf die weiter unten beschriebenen Durchbrüche nicht zur C-Seite des Trägers hin offen. Der Träger kann aus Kunststoff bestehen und in einem Spritzgussverfahren hergestellt werden. Der Träger kann auch aus einem Faser-Verbundwerkstoff oder einem anderen formbaren, z.B. thermoplastischen oder duroplastischen Material bestehen. In einer Ausführungsform ist der Träger 14 ein übliches Substrat eines Dachhimmels. Auf der B-Seite des Trägers 14 kann optional eine Weichzeichner-Schicht (Scrim), z.B. eine helle nicht-gewebte Textilschicht aufgebracht sein. Der Träger 14 wird vorzugsweise in einem Presswerkzeug in die gewünschte Form gebracht, wie weiter unten noch beschrieben ist.

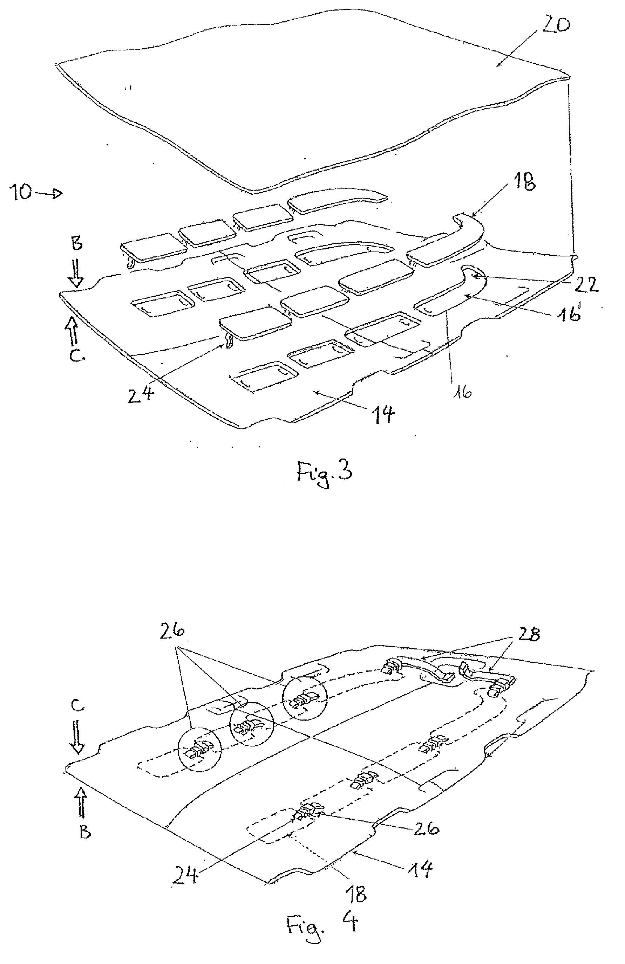

Fig. 3 zeigt schematisch in Explosionsdarstellung eine Verkleidungseinrichtung 10, welche in Fig. 1 den Dachhimmel bildet. Die Verkleidungseinrichtung 10 umfasst den Träger 14 der Fig. 2 sowie eine Reihe von Beleuchtungseinheiten 18, welche in die Vertiefungen 16 eingefügt werden. Der Träger 14 und die Beleuchtungseinheiten 18 werden von einer Deckschicht 20 abgedeckt, die einen ein-, zwei- oder mehrlagigen Aufbau haben kann. Die Deckschicht umfasst beispielsweise ein Grundmaterial aus Schaumstoff und eine Decklage aus Textil, perforiertem Leder oder Alcantara, semitransparenten Kunststoff, z.B. TPU oder PVC, oder ein nicht-gewebtes Material, z.B. ein Teppichmaterial. In Fig. 3 sind schematische Durchbrüche 22 dargestellt, die im Bereich der Böden 16' der Vertiefungen 16, jeweils in der Nähe der Vertiefungsränder ausgebildet sind. In dem gezeigten Ausführungsbeispiel weist jede Vertiefung zwei Durchbrüche 22 in ihrem Boden 16' an gegenüberliegenden Seiten der Vertiefungen auf. Diese Durchbrüche 22 dienen zum Hindurchführen von Anschlusskabeln 24 der Beleuchtungseinheiten 18 von der B-Seite des Trägers 14 zu seiner C-Seite. Die Anschlusskabel 24 können beispielsweise in Form von Leitungen auf einer flexiblen gedruckten Leiterplatte (FPC) vorgesehen oder als Flachbandkabel ausgebildet sein. Der Begriff Anschlusskabel umfasst im Kontext dieser Erfindung jedes Element, das dazu geeignet ist, die Lichtquelle mit einem Anschluss auf der C-Seite des Trägers zu koppeln. Die Einzelheiten der Beleuchtungseinheiten 18 sind unten ausführlich dargelegt.

Fig. 4 zeigt eine Unteransicht der Verkleidungseinrichtung der Fig. 3, also die C-Seite des Trägers 14. Die auf der B-Seite liegenden Beleuchtungseinheiten 18 sind gestrichelt dargestellt. Die C-Seite des Trägers 14 ist bis auf die Durchbrüche für die Anschlusskabel 24 geschlossen. Die Beleuchtungseinheiten 18 sind auf der C-Seite des Trägers durch elektrische Stecker 26 in Reihe geschaltet. Die elektrischen Stecker 26 sind über die Anschlusskabel 24 mit den Beleuchtungseinheiten gekoppelt. Die Reihenschaltung mehrerer Beleuchtungseinheiten ist in dem gezeigten Ausführungsbeispiel mit einem Kabelstrang oder Kabelbaum 28 verbunden. Über den Kabelbaum 28 werden sie mit Strom versorgt und angesteuert. Die Verkabelung der Beleuchtungseinheiten 18 kann nach der Fertigstellung der Verkleidungseinrichtung erfolgen, insbesondere nach ihrer Montage auf dem Träger 14 und nach dem Auflaminieren der Deckschicht 20.

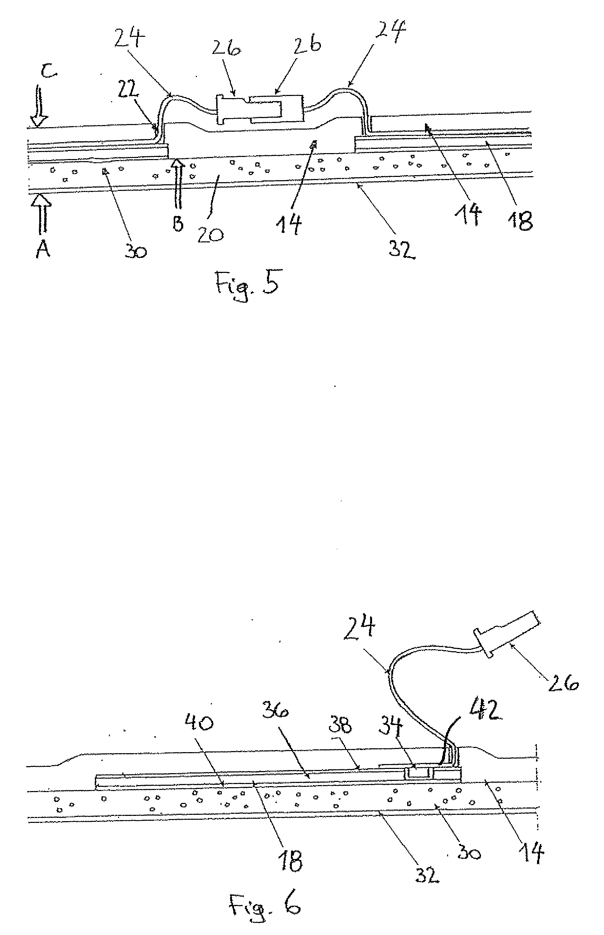

Fig. 5 zeigt eine schematische Schnittdarstellung durch einen Teil einer Verkleidungseinrichtung gemäß einem Ausführungsbeispiel. Entsprechende Komponenten wie in den vorherigen Figuren sind mit denselben Bezugszeichen gekennzeichnet. In der Darstellung der Fig. 5 ist die C-Seite des Trägers oben und die B-Seite des Trägers unten. Die Oberfläche der auf den Träger aufgebrachten Deckschicht 20 bildet die Sichtseite oder A-Seite der Verkleidungseinrichtung. In Fig. 5 ist zu erkennen, wie die nur schematisch dargestellten Beleuchtungseinheiten 18 in Vertiefungen auf der B-Seite des Trägers 14 sitzen. Die Beleuchtungseinheiten 18 sind auf der C-Seite des Trägers über die Anschlusskabel 24 und Stecker 26 verbunden. Die Anschlusskabel 24 sind durch hierfür vorgesehene Durchbrüche 22 geführt. In der Ausführung der Fig. 5 ist die Deckschicht 20 zweilagig aufgebaut, mit einem Grundmaterial 30 aus Schaumstoff und einem Deckmaterial 32 aus Textil, perforiertem Leder oder Alcantara, einer semitransparenten Kunststofffolie oder dergleichen. Das Deckmaterial 32 der Deckschicht bildet die Sichtseite der Verkleidungsanordnung.

Fig. 6 zeigt eine ähnliche Darstellung wie Fig. 5, wobei die Beleuchtungseinheit 18 mit weiteren Einzelheiten gezeigt ist. Entsprechende Komponenten wie in den vorhergehenden Figuren sind mit denselben Bezugszeichen gekennzeichnet.

Die Beleuchtungseinheit 18 umfasst eine punktförmige Lichtquelle 34, vorzugsweise eine LED und noch stärker bevorzugt eine SMD-LED (Licht emittierende Diode als Oberflächen-montierbares Bauteil). Ist das Anschlusskabel 24 beispielsweise als gedruckte flexible Leiterplatte ausgebildet, so kann die Lichtquelle 34 direkt an das Anschlusskabel 24 angeschlossen, insbesondere angelötet werden. Die Beleuchtungseinheit 18 umfasst ferner einen Lichtleiter 36 zur Erzeugung einer LED-Hintergrundbeleuchtung, auch als LED-Backlight bezeichnet. Der Lichtleiter 36 ist beispielsweise eine flache Platte aus einem transparenten Kunststoff, wie Acrylglas. Das Licht der Lichtquelle 34 wird in dem gezeigten Ausführungsbeispiel an einer Seite des Lichtleiters 36 eingekoppelt. Die LEDs können jedoch an jeder anderen Stelle des Lichtleiters angeordnet sein, beispielsweise um den Umfang der Platte herum oder verteilt über die Fläche des Lichtleiters. Sie können auch zur Darstellung einer bestimmten Form, Grafik oder Text relativ zu dem Lichtleiter angeordnet sein.

In dem gezeigten Ausführungsbeispiel umfasst die Beleuchtungseinheit ferner einen Reflektorfilm 38 und einen Diffusor-Film 40. Der Reflektorfilm 38 liegt zwischen dem Träger 14 und dem Lichtleiter 36, und der Diffusor-Film 40 liegt über dem Lichtleiter 36. Diese Filme können beispielsweise aufgedruckt werden, z.B. im Siebdruckverfahren, oder auf andere Weise aufgebracht werden. Die das Anschlusskabel bildende flexible Schaltungsplatte 42 kann sich über die gesamte Länge der Beleuchtungseinheit erstrecken und nicht nur die Lichtquelle 34 und gegebenenfalls zugeordnete Schaltungsbauteile, wie einen Widerstand, sondern auch den gedruckten Reflektorfilm 34 aufnehmen. Selbstverständlich kann im Bereich der Beleuchtungseinheit auch eine starre Schaltungsplatte, z. B. aus einer mit Epoxidharz getränkten Glasfasermatte (Materialkennung FR4), verwendet werden.

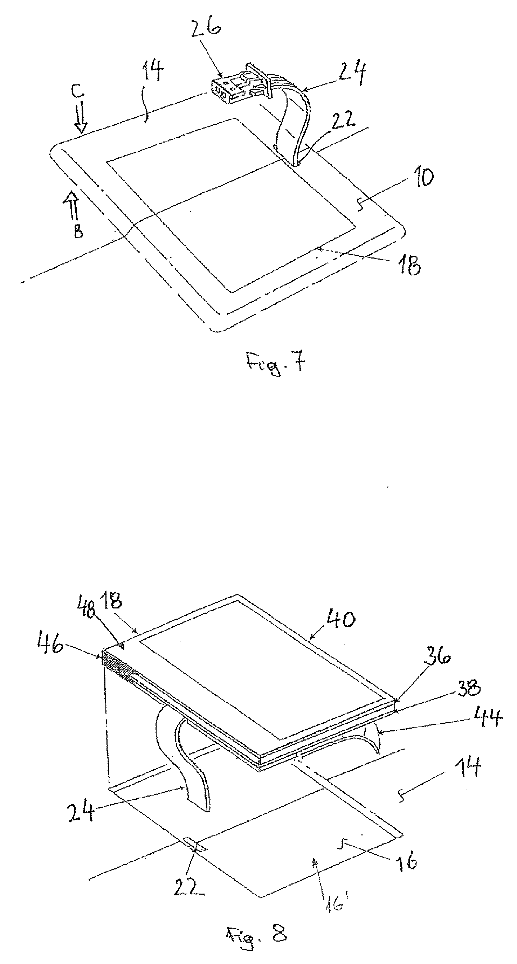

Fig. 7 zeigt nochmals eine andere Ansicht der Unterseite (C-Seite) der Verkleidungseinrichtung, wobei korrespondierende Teile mit denselben Bezugszeichen wie in den vorhergehenden Figuren gekennzeichnet sind. In der gezeigten Ausführung ist das Anschlusskabel 24 als Fachbandkabel ausgebildet. Die Beleuchtungseinheit 18 auf der B-Seite des Trägers 14 ist gestrichelt dargestellt.

Fig. 8 zeigt die B-Seite der Verkleidungseinrichtung der Fig. 7 (ohne Deckschicht) in Teil-Explosionsdarstellung. Entsprechende Komponenten sind mit denselben Bezugszeichen wie in den vorhergehenden Darstellungen gekennzeichnet. Fig. 8 lässt erkennen, wie die Beleuchtungseinheit 18 in die Vertiefung 16 des Trägers 14 einzufügen ist, wobei das Anschlusskabel 24 durch den Durchbruch 22 im Boden 16' der Vertiefung geführt wird. Die Beleuchtungseinheit 18 ist mit dem Diffusor-Film 40, dem Lichtleiter 36 und dem Reflektorfilm 38 aufgebaut. Zur Befestigung der Beleuchtungseinheit 18 an dem Träger 14 dient eine Klebschicht 44, z.B. eine Klebfolie, die mit dem Boden 16' verbunden wird. An dem Umfang der Beleuchtungseinheit 18 ist in dem gezeigten Ausführungsbeispiel ein Maskierungselement 46 angeordnet, das den Lichtaustritt der Beleuchtungseinheit 18 zur Seite hin begrenzt. Ein anderes Maskierungselement 48 kann an der Oberseite der Beleuchtungseinheit 18 vorgesehen sein. Das Maskierungselement 48 kann beispielsweise auf den Diffusor-Film 40 aufgedruckt sein. Es kann eine Anzeige oder ein dekoratives Element eingrenzen.

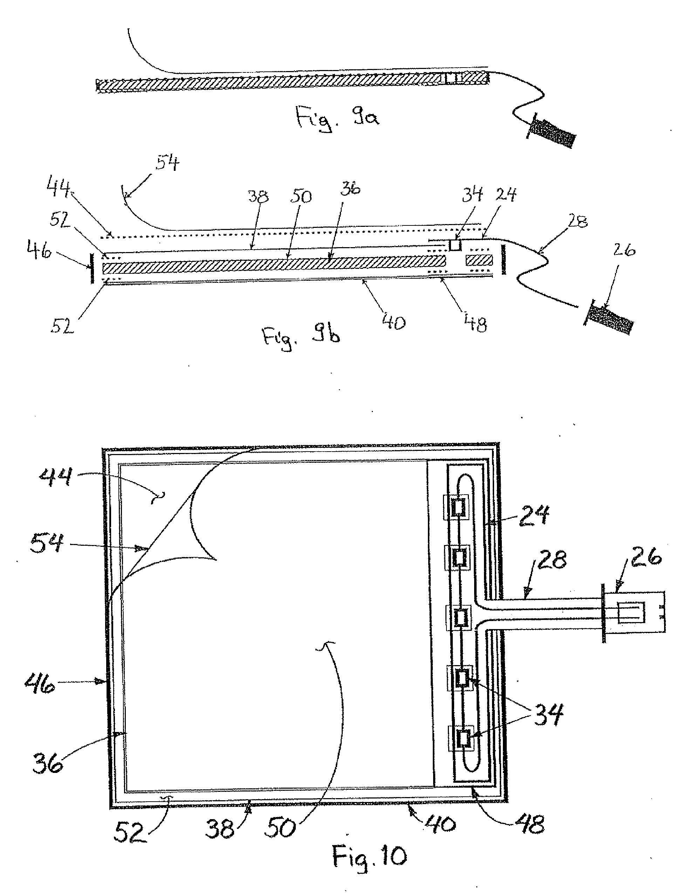

Fig. 9A und 9B zeigen schematische Schnittdarstellungen durch eine weitere Ausführungsform einer Beleuchtungseinheit der Verkleidungseinrichtung, wobei Fig. 9B eine Explosionsdarstellung der Fig. 9A ist. Entsprechende Bauteile sind mit denselben Bezugszeichen wie in den vorhergehenden Figuren gekennzeichnet. Die Beleuchtungseinheit der Figuren 9A und 9B umfasst eine Lichtquelle 34, die als SMD-LED ausgebildet und mit dem Anschlusskabel 24 verbunden ist. Das Anschlusskabel 24 wird vorzugsweise in einer flexiblen gedruckten Schaltungsplatte realisiert, auf die auch die Lichtquelle 34 aufgelötet ist. Die Beleuchtungseinheit umfasst ferner einen Lichtleiter 36 beispielsweise in Form einer dünnen transparenten Kunststoffplatte. Auf den Lichtleiter 36 ist in der gezeigten Ausführung eine Streustruktur oder ein Streumuster 50 aufgebracht, z. B. aufgedruckt. Unter dem Lichtleiter 36 (in den Fig. 9A und 9B oben) liegt ein Reflektorfilm 38, und über dem Lichtleiter 36 liegt ein Diffusor-Film 40. Der Diffusor-Film 40 ist mit einem Maskierungselement 48 abgedeckt, das beispielsweise eine gedruckte Grafik enthalten kann. Zur seitlichen Lichtbegrenzung dient ein seitliches Maskierungselement 46. Der Lichtleiter 36 ist mit dem Reflektorfilm 38 und dem Diffusor-Film 40 über Klebebänder 52 verbunden. Auf die Seite der Beleuchtungseinheit, die mit dem Träger in Kontakt gebracht wird, ist ferner eine Klebeschicht 44 aufgebracht, die mit einer abziehbaren Schutzfolie 54 versehen ist. Anstelle der im Voraus aufgebrachten Klebeschicht 44 kann die Verbindung zwischen der Beleuchtungseinheit und dem Träger auch durch Aufbringen beispielsweise eines Sprühklebers unmittelbar vor der Montage erfolgen. Es ist auch möglich, die Beleuchtungseinheit 18 auf andere Weise als durch Kleben auf dem Träger 14 zu fixieren, beispielweise mittels der darüberliegenden Deckschicht 20 (in Fig.e 9A und 9B nicht gezeigt). Zur besseren Übersichtlichkeit sind die Bezugszeichen in Fig. 9A weggelassen.

Fig. 10 zeigt eine Draufsicht auf die Beleuchtungseinheit der Figuren 9A und 9B. Entsprechende Komponenten sind mit denselben Bezugszeichen gekennzeichnet. Aus Fig. 10 ist zu erkennen, dass die Beleuchtungseinheit mehrere Lichtquellen 34 umfassen kann, die entlang eines Randes des Lichtleiters 36 angeordnet und, in der gezeigten Ausführung, in Reihe geschaltet sind. Die Lichtquellen 34 sind über das Anschlusskabel 24 mit dem Stecker 26 verbunden. Die Lichtquellen 34 müssen nicht notwendig am Rand des Lichtleiters 36 angeordnet sein, sondern sie können beispielsweise auch in Ausnehmungen in diesen hineinragen.

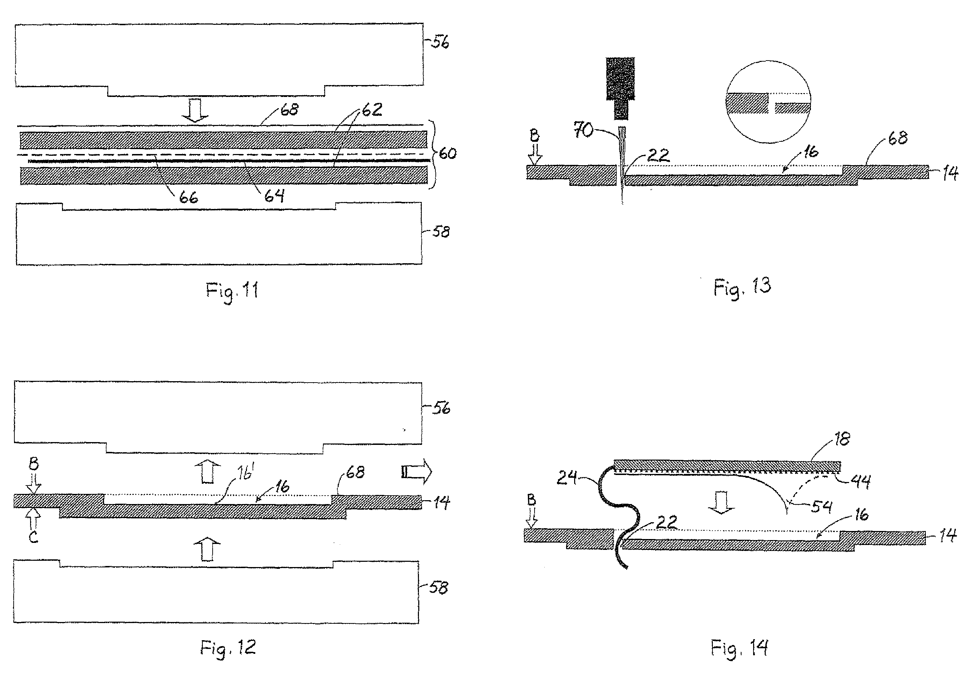

Die Figuren 11 bis 22 illustrieren eine Abfolge von Prozessschritten zur Herstellung einer Verkleidungseinrichtung, wobei die Figuren 14 bis 16 Alternativen zur Befestigung der Beleuchtungseinheit an dem Träger illustrieren. Fig. 11 zeigt ein Presswerkzeug mit einer Oberform 56 und einer Unterform 58. Ein Material-Rohling 60 zur Herstellung des Trägers wird in das Presswerkzeug eingebracht. In dem gezeigten Ausführungsbeispiel umfasst der Rohling zwei strukturierte Platten aus PUR-Schaum 62, zwischen die eine Glasfasermatte 64 eingefügt ist. Die Glasfasermatte 64 und die PUR-Schaum-Platten 62 sind über eine Klebeschicht 66 verbunden. Auf der Seite des Material-Rohlings 60, die später die B-Seite des Trägers bildet, ist zusätzlich eine helle nicht-gewebte Weichzeichnerschicht 68 aufgebracht. Der in Fig. 11 gezeigte Aufbau des Material-Rohlings 60 ist lediglich beispielhaft. Zum Herstellen des Trägers 14 wird die Oberform 56 auf die Unterform 58 abgesenkt und der Material-Rohling 60 wird verformt, um die in Fig. 12 gezeigte Struktur mit der Vertiefung 16 zu erzeugen. Das Presswerkzeug wird geöffnet, und der fertige Träger 14 kann entnommen werden.

Anschließend wird, wie in Fig. 13 gezeigt, der Durchbruch 22 in dem Träger 14 ausgebildet, beispielsweise durch Wasserstrahlschneiden mit einem Wasserstrahl 70 oder durch Stanzen.

Der Durchbruch 22 liegt vorzugsweise ganz am Rand der Vertiefung 16. Es können auch mehrere Durchbrüche 22 in einer Vertiefung oder in der Nähe einer Vertiefung ausgebildet werden.

Wird eine Beleuchtungseinheit 18 mit einer im Voraus applizierten Klebeschicht 44 verwendet, so wird in einem nächsten Schritt, wie in Fig. 14 gezeigt, die Schutzfolie 54 von der Klebeschicht entfernt und das Anschlusskabel 24 durch den Durchbruch 22 von der B-Seite zur C-Seite des Trägers 14 geführt. Die Beleuchtungseinheit 18 kann dann mittels der Klebeschicht 44 fest in die Vertiefung 16 eingeklebt werden.

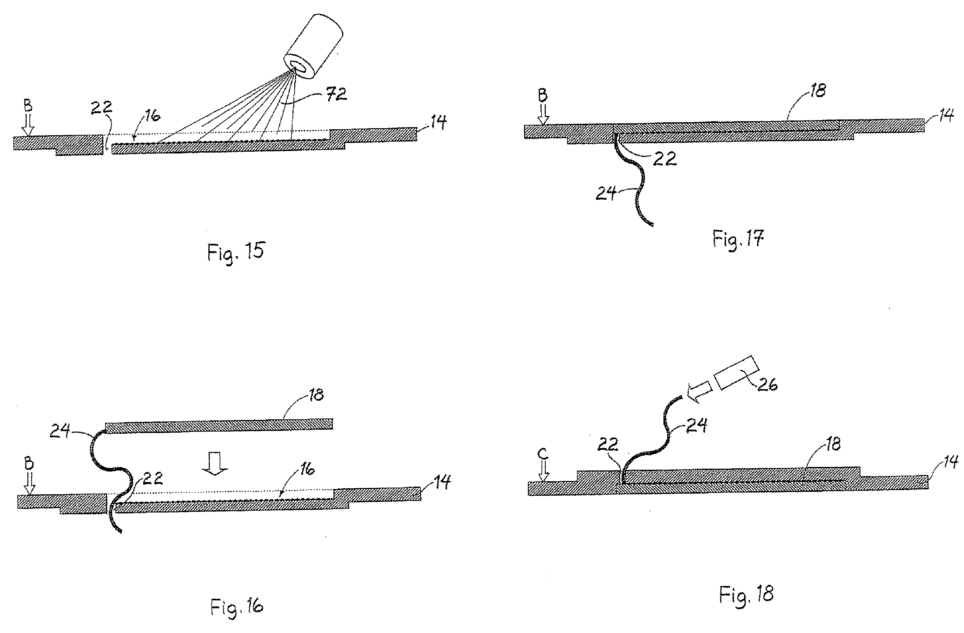

Weist die Beleuchtungseinheit 18 keine im Voraus applizierte Klebeschicht auf, so kann in einer alternativen Ausgestaltung, die in Fig. 15 gezeigt ist, ein Sprühkleber 72 auf den Boden der Vertiefung 16 aufgetragen werden. Anschließend wird das Anschlusskabel 26 durch den Durchbruch 22 hindurch von der B-Seite zur C-Seite des Trägers 14 geführt, wie in Fig. 16 gezeigt, und die Beleuchtungseinheit 18 wird in die Vertiefung 16 des Trägers 14 eingeklebt. In beiden Fällen erhält man somit die in Fig. 17 gezeigte Struktur. Es ist nicht zwingend notwendig, den Träger 14 und die Beleuchtungseinheit 18 zu verkleben.

Die Beleuchtungseinheit 18 sitzt bündig in der Vertiefung 16 des Trägers 14, so dass sich insgesamt eine kontinuierliche oder im Wesentlichen kontinuierliche ebene Oberfläche ergibt. Am Umfang der Beleuchtungseinheit 18 kann zu dem Rand der Vertiefung ein geringfügiger Spalt entstehen, der jedoch kleiner als 1 mm sein sollte. Abweichend von der gezeigten Ausführung kann die Vertiefung 16 auch mit einer umlaufenden Stufe ausgebildet werden, und der Durchbruch für das Anschlusskabel kann im Bereich der Stufe vorgesehen sein.

In einem nächsten Arbeitsschritt, der in Fig. 18 gezeigt ist, wird das Anschlusskabel 24 auf der Rückseite (C-Seite) des Trägers 14 mit einem Stecker 26 verbunden. Dieser Arbeitsschritt könnte gegebenenfalls auch zu einem späteren Zeitpunkt erfolgen.

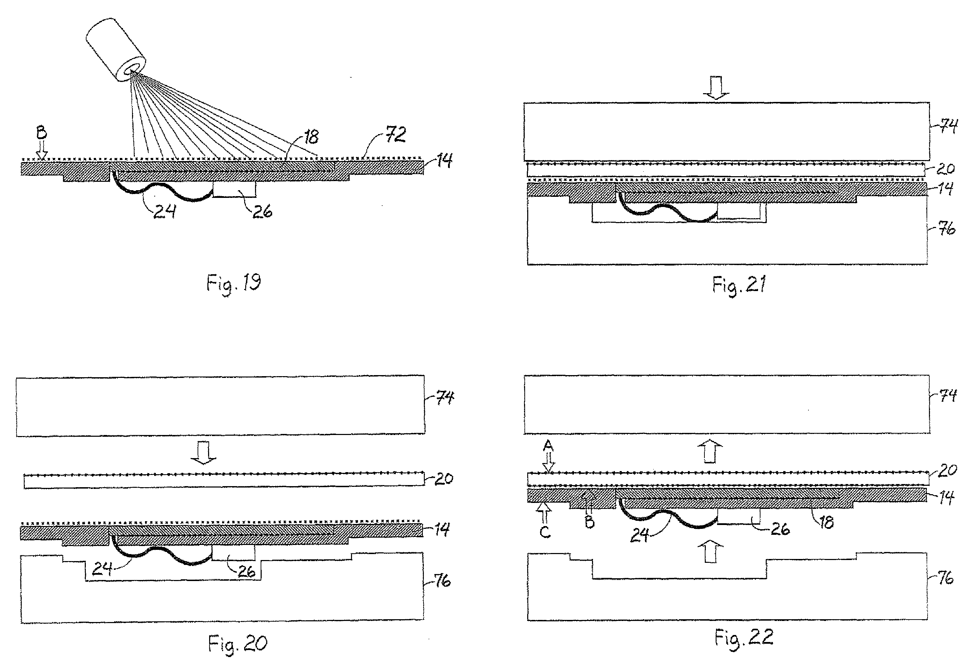

Anschließend wird, wie in Fig. 19 gezeigt, eine Klebschicht 72 auf die B-Seite des Trägers, d.h. auf den Verbund aus Träger 14 und Beleuchtungseinheit 18 aufgebracht, z. B. aufgesprüht.

Der so vorbereitete Verbund wird zusammen mit einer Deckschicht 20 in ein Presswerkzeug mit einer weiteren Oberform 74 und einer weiteren Unterform 76 eingebracht, wie in Fig. 20 gezeigt. Die Oberform 74 wird auf der Unterform 76 geschlossen, siehe Fig. 21, wobei die Unterform 76 eine Aufnahme für den Stecker 26 aufweist, so dass dieser während des Pressvorgangs nicht beschädigt wird. Auf diese Weise wird die Deckschicht 20 mit der B-Seite des Trägers 14 und der Beleuchtungseinheit 18 fest verbunden bzw. laminiert.

Unter- und Oberform 74, 76 werden geöffnet, und die fertige Verkleidungseinrichtung kann entnommen werden, wie in Fig. 22 gezeigt.

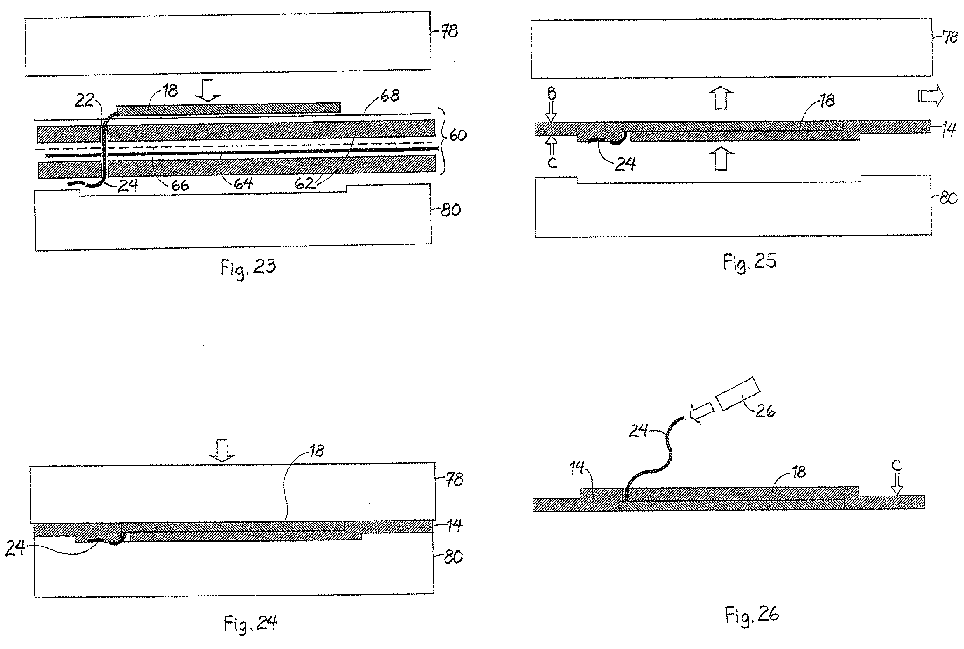

Die Figuren 23 bis 30 zeigen eine alternative Abfolge von Schritten eines Verfahrens zum Herstellen einer Verkleidungseinrichtung.

Korrespondierende Teile sind mit denselben Bezugszeichen gekennzeichnet. Das Verfahren verwendet einen Material-Rohling 60, der wie in dem ersten Verfahrensbeispiel oder anders aufgebaut sein kann. Der in Fig. 23 dargestellte Material-Rohling 60 entspricht dem von Fig. 11 und ist hier nicht nochmals im Einzelnen erläutert. Abweichend von dem ersten Verfahrensbeispiel wird in dem alternativen Konzept der Durchbruch 22 für das Anschlusskabel 24 der Beleuchtungseinheit 18 bereits in dem Material-Rohling 60 ausgebildet, beispielsweise durch Stanzen oder Wasserstrahlschneiden. Das Anschlusskabel 24 wird durch den Durchbruch 22 hindurchgeführt, und die Beleuchtungseinheit 18 wird an der gewünschten Position auf den Material-Rohling 60 aufgelegt. Die so vormontierte Anordnung wird in ein Presswerkzeug mit einer Oberform 78 und einer Unterform 80 eingebracht. Die Formfläche des Oberwerkzeugs 78 im Formhohlraum ist im Wesentlichen eben, wie in Fig. 23 gezeigt. Die Formfläche der Unterform 80 im Formhohlraum weist eine Vertiefung auf, um bei dem Pressvorgang verdrängtes Material aufzunehmen. Die genaue Positionierung der Baugruppe aus dem Material-Rohling 60 und der Beleuchtungseinheit 18 in dem Formwerkzeug kann beispielsweise dadurch sichergestellt werden, dass in die Oberform 78 ein Magnet integriert ist (nicht gezeigt), zu dem sich die Beleuchtungseinheit 18 ausrichtet. Damit können geringe Lagetoleranzen ausgeglichen werden. Die Vertiefung in der Unterform 80 sollte jedenfalls so groß sein, dass sie sicher das durch die Beleuchtungseinheit 18 verdrängte Material und das Anschlusskabel 24 aufnehmen kann.

Das Presswerkzeug wird geschlossen, indem die Oberform 78 auf die Unterform 80 abgesenkt wird, wie in Fig. 24 gezeigt. Dabei wird der Material-Rohling 60 verformt, um den Träger 14 zu bilden. Gleichzeitig wird die Beleuchtungseinheit 18 in den Träger 14 gedrückt; siehe Fig. 24. Nach dem Öffnen des Presswerkzeugs erhält man, wie in Fig. 25 gezeigt, einen Verbund aus Träger 14 und Beleuchtungseinheit 18 mit einer kontinuierlichen oder im Wesentlichen kontinuierlichen ebenen Oberfläche auf der B-Seite des Trägers.

Nach der Entnahme der Einheit aus Träger 14 und Beleuchtungseinheit 18 aus dem Presswerkzeug kann das Anschlusskabel 24 auf der C-Seite des Trägers 14 mit einem Stecker 26 verbunden werden, siehe Fig. 26, wobei dieser Schritt auch später in dem Prozessablauf durchgeführt werden kann.

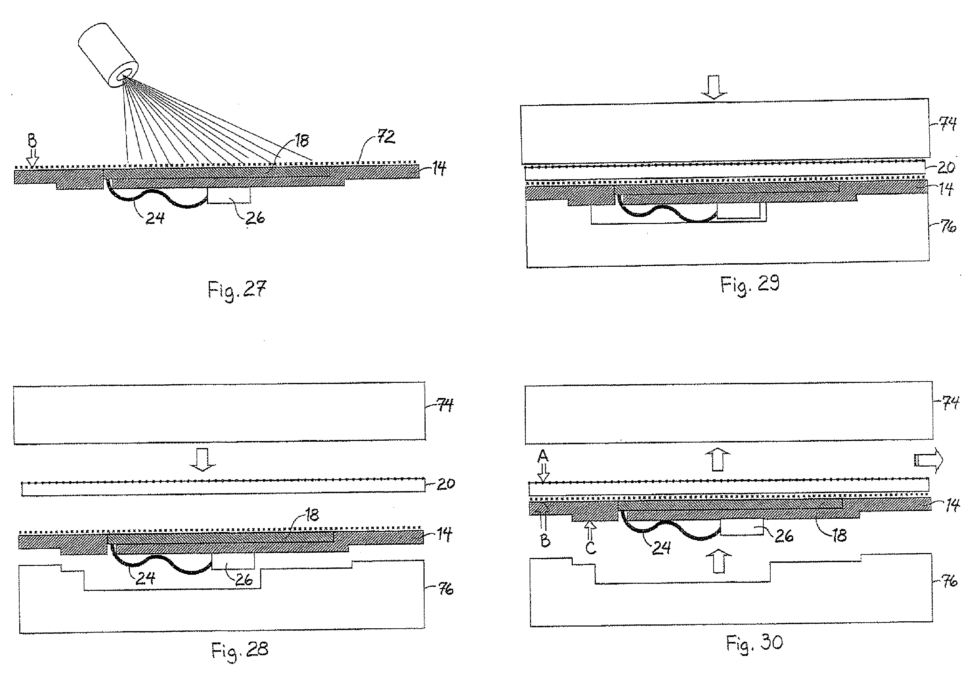

Die weiteren Verfahrensschritte, die in den Fig. 27 bis 30 gezeigt sind, entsprechen den Fig. 19 bis 22 der ersten Verfahrensvariante, auf die Bezug genommen wird. Diese Schritte sind daher nicht mehr im Einzelnen beschrieben. Das Presswerkzeug mit Oberform 74 und Unterform 76 kann ebenfalls wie in der ersten Verfahrensvariante ausgestaltet sein. Die resultierende Verkleidungseinrichtung unterscheidet sich von dem in der ersten Verfahrensvariante hergestellten Produkt dadurch, dass die Beleuchtungseinheit 18 nicht in die Vertiefung des Trägers 14 eingeklebt ist. Sie wird in der Vertiefung aufgrund des Pressvorgangs kraftschlüssig gehalten und durch die auflaminierte Deckschicht 20 fixiert.

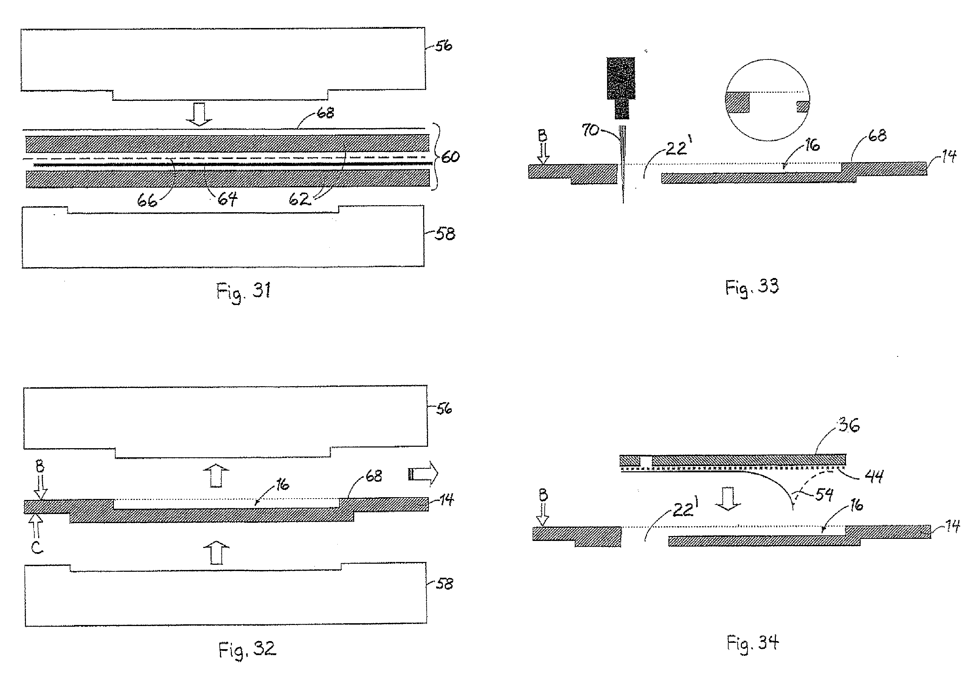

Die Fig. 31 bis 43 illustrieren eine Abfolge von Prozessschritten zur Herstellung der erfindungsgemäßen Verkleidungseinrichtung gemäß einer erfindungsgemäßen Ausführung, wobei die Fig. 34 bis 36 Alternativen zur Befestigung des Lichtleiters der Beleuchtungseinheit an dem Träger illustrieren. Korrespondierende Teile sind mit denselben Bezugszeichen gekennzeichnet wie in den zuvor beschriebenen Figuren. Die ersten Prozessschritte zur Formung des Trägers, die in den Fig. 31 und 32 gezeigt sind, sind identisch mit den mit Bezug auf die Fig. 11 und 12 beschriebenen Prozessschritten. Auf die obige Beschreibung wird Bezug genommen.

Nach der Formung des Trägers wird, wie in Fig. 33 gezeigt, der Durchbruch 22' in dem Träger ausgebildet, beispielsweise durch Wasserstrahlschneiden mit einem Wasserstrahl 70 oder durch Stanzen. Der Durchbruch 22' liegt vorzugsweise am Rand der Vertiefung 16. Es können mehrere Durchbrüche 22' in der Vertiefung oder in der Nähe der Vertiefung ausgebildet werden. In dieser erfindungsgemäßen Ausführung ist der Durchbruch 22' etwas größer als in den zuvor beschriebenen Ausführungen, weil nicht nur das Anschlusskabel 24 durch den Durchbruch geführt wird, sondern weil er auch die eine oder mehrere Lichtquellen aufnimmt, wie weiter unten beschrieben ist.

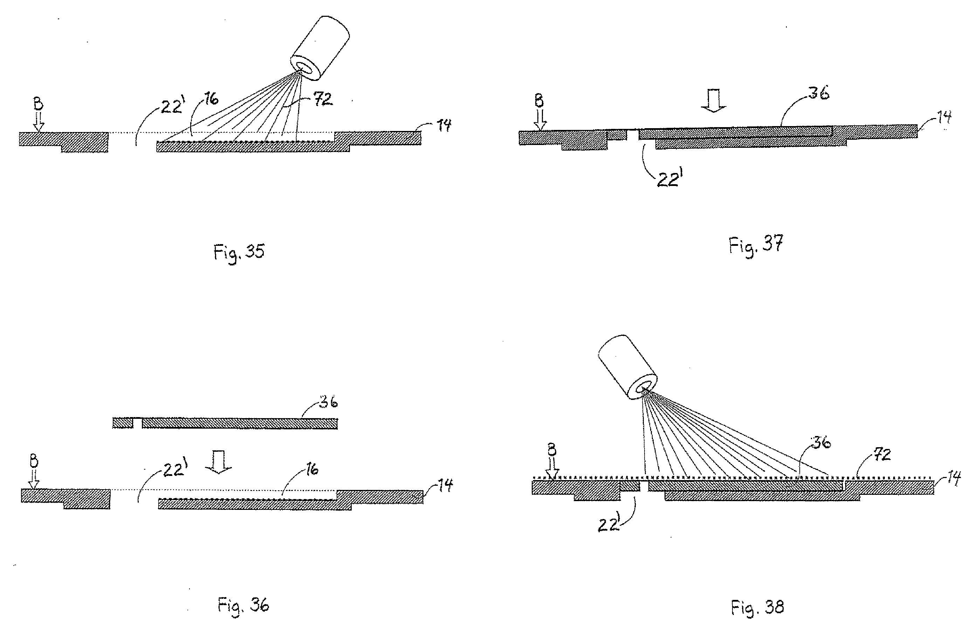

Das erfindungsgemäß Ausführungsbeispiel unterscheidet sich von den vorhergehenden Prozessfolgen dadurch, dass nicht die Beleuchtungseinheit insgesamt in einem Schritt in den Träger eingebracht wird, sondern dass zunächst nur der Lichtleiter 36 in die Vertiefung 16 des Trägers 14 eingebracht wird. Der Lichtleiter 36 kann eine Licht leitende Kunststoffplatte sein, die das Licht von einer oder mehreren punktförmigen Lichtquellen, z.B. LEDs, aufnimmt und über ihre Fläche abstrahlt. Bis auf diesen Unterschied entsprechen die Fig. 34 bis 37 den Fig. 14 bis 17 des ersten Ausführungsbeispiels und zeigen, wie der Lichtleiter 36 in die Vertiefung 16 des Trägers 14 eingeklebt wird, wobei z.B. eine im voraus applizierte Klebeschicht 44 oder ein Sprühkleber 72 zum Einsatz kommen kann. Unabhängig von der Art der Verklebung oder sonstigen Befestigungen des Lichtleiters 36 in dem Träger 14 ergibt sich die in Fig. 37 gezeigte Struktur, wobei der Lichtleiter 36 bündig in der Vertiefung 16 des Trägers 14 liegt, so dass der Verbund insgesamt eine kontinuierliche oder im wesentlichen kontinuierliche ebene Oberfläche hat. Insofern wird auf die obige detailliere Beschreibung Bezug genommen.

Es ist auch möglich, die in Fig. 37 gezeigte Struktur durch ein Verfahren gemäß den Fig. 23 bis 25 herzustellen, wobei auch in diesem Fall Anschlusskabel und Lichtquelle(n) zunächst weggelassen sind und der Durchbruch 22' etwas größer als in den ersten Ausführungen ausgebildet werden sollte.

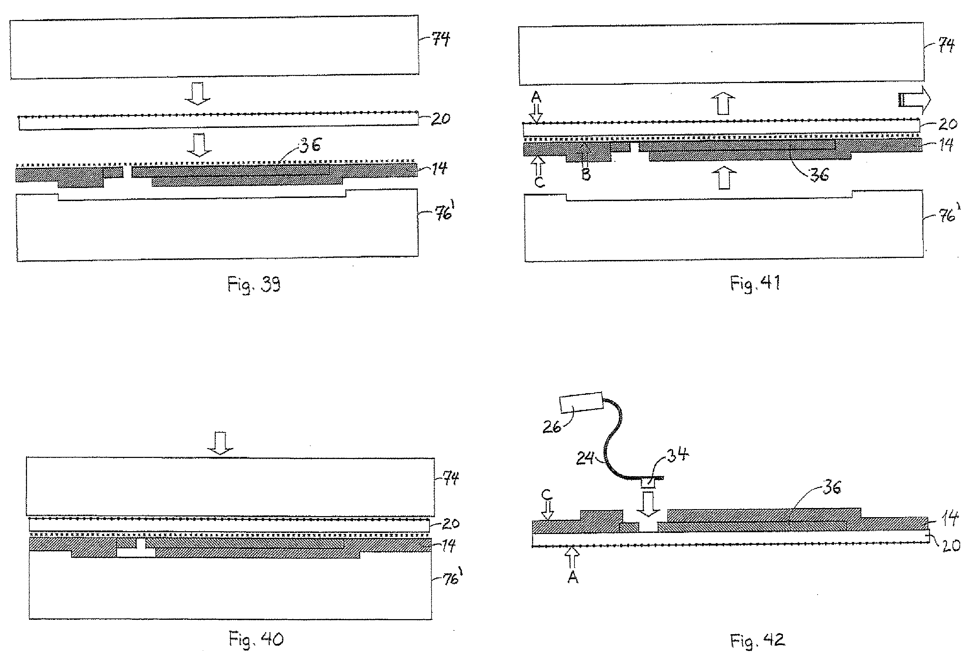

Nach der Herstellung des Verbundes aus Träger 14 und Lichtleiter 36, der in Fig. 37 gezeigt ist, wird die Deckschicht 20 auf den Lichtleiter 36 und die B-Seite des Trägers 14 aufgebracht, wie in den Fig. 38 bis 41 gezeigt. Diese Figuren entsprechend weitgehend den Fig. 19 bis 22 der ersten Ausführungsform, auf deren Beschreibung Bezug genommen wird. Da die Lichtquelle mit ihrem Anschlusskabel noch nicht mit dem Lichtleiter 36 und dem Träger 14 gekoppelt ist, muss die Unterform 76' keine Ausnehmung zur Aufnahme des Anschlusskabels 24 und seines Steckers 26 aufweisen, wie sich aus einem Vergleich der Fig. 39 bis 41 mit den Fig. 20 bis 22 ergibt. Hieraus ergeben sich mehrere Vorteile: Der Verbund aus Träger 14 und Lichtleiter 36 kann mit der Deckschicht 20 gleichmäßiger verpresst werden, weil die Unterform 76' vollflächig an der C-Seite des Trägers 14 anliegt. Dadurch erhält man eine qualitativ hochwertige Verbindung. Ferner besteht nicht die Gefahr, dass während des Pressvorgangs das Anschlusskabel 24 und/oder der Stecker 26 oder gar die Lichtquelle 34 beschädigt werden. Sie werden den entsprechenden Druckbelastungen gar nicht mehr ausgesetzt.

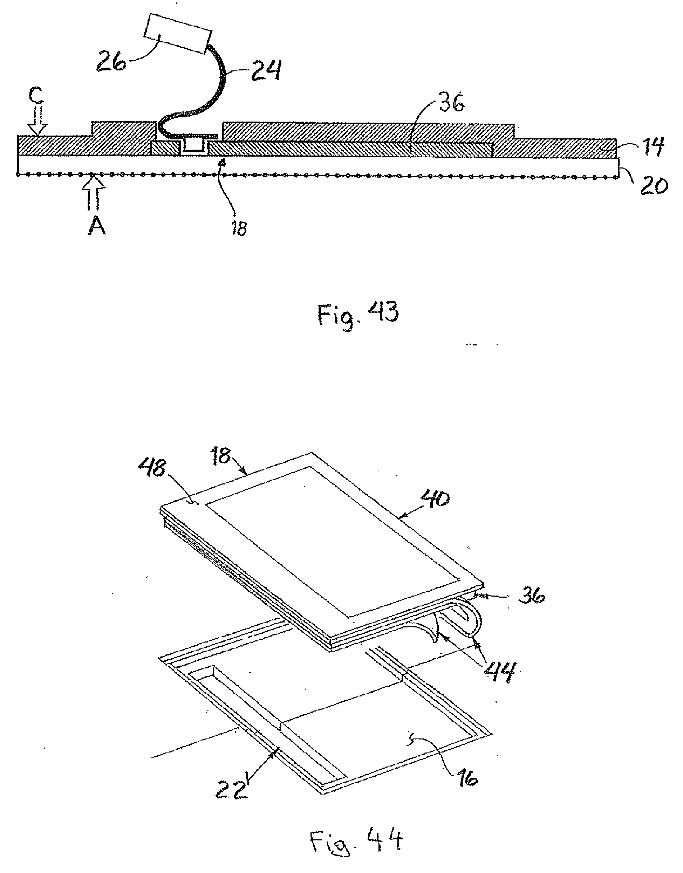

Nach dem Öffnen von Oberform 74 und Unterform 76' kann der Verbund aus Träger 14, Lichtleiter 36 und Deckschicht 20 aus dem Presswerkzeug entnommen werden, um die Lichtquelle 34 mit ihrem Anschlusskabel 24 und Stecker 26 in den Verbund einzusetzen, wie in den Fig. 42 und 43 gezeigt. Der gesamte aktive Teil der Beleuchtungseinheit wird also erst in den Träger eingebracht, nachdem der gesamte Verbund, einschließlich der Deckschicht 20 hergestellt ist. Dadurch minimiert sich das Risiko der Beschädigung der Beleuchtungseinheit während der Herstellung der Verkleidungseinrichtung, und es ist einfacher, die Beleuchtungseinheit zu warten und möglicherweise beschädigte Anschlusskabel oder Lichtquellen auszutauschen.

Die Fig. 44 bis 46 zeigen nochmals in isometrischer Darstellung einzelne Schritte des erfindungsgemäßen

Ausführungsbeispiels. In Fig. 44 ist dargestellt, wie die Beleuchtungseinheit 18 in die Vertiefung 16 des Trägers eingesetzt wird. Diese Darstellung entspricht der Fig. 8 der ersten Ausführungsform, auf die Bezug genommen wird. Wie dargestellt, fehlen in dieser erfindungsgemäßen Ausführung zunächst das Anschlusskabel und die Lichtquelle, und der Durchbruch 22' ist entsprechend größer ausgebildet, um die Lichtquelle nachträglich, d.h. nach dem Aufbringen der Deckschicht 20, einsetzen zu können.

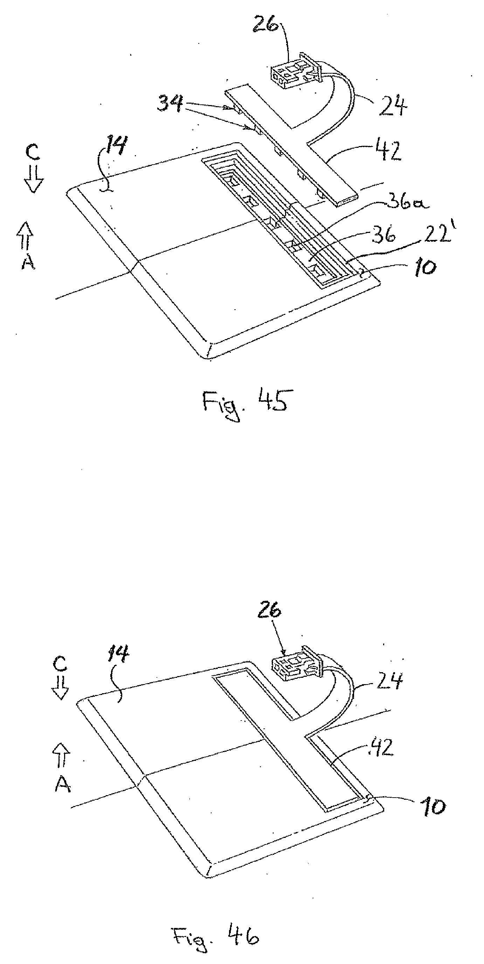

Das Einsetzen der Lichtquellen 34, die auf einer flexiblen Leiterplatte 42 sitzen und mit dem Anschlusskabel 24 und dem Stecker 26 verbunden sind, ist in Fig. 45 gezeigt. Die flexible Schaltungsplatte 42 mit den Lichtquellen 34 darauf wird durch den vergrößerten Durchbruch 22' hindurch in die Verkleidungseinrichtung 10 eingesetzt. Dabei kommen die Lichtquellen 34 in Ausnehmungen 36a in dem Lichtleiter 36 zu liegen, um Licht in den Lichtleiter einzuspeisen. Wie oben dargelegt, können eine oder mehrere LEDs an jeder geeigneten Stelle des Lichtleiters angeordnet werden, beispielsweise um den Umfang der Licht leitenden Platte herum oder verteilt über die Fläche des Lichtleiters. Sie können auch so angeordnet sein, dass sie in Verbindung mit dem Lichtleiter eine bestimmte Form, Grafik oder Text darstellen. Das Licht der Lichtquellen 34 wird vorzugsweise an einer innen oder außen liegenden Kante des Lichtleiters eingespeist.

Fig. 46 zeigt in isometrischer Darstellung die fertige Verkleidungseinrichtung gemäß der Erfindung, wobei in der Figur die C-Seite der Verkleidungseinrichtung oben und die A-Seite unten liegt. Die Darstellung entspricht insofern der Fig. 7, wobei jedoch in dieser dritten Ausführung, wie oben erläutert, die Deckschicht (in Fig. 46 nicht gezeigt) bereits auf den Träger 14 aufgebracht ist, bevor die Lichtquelle(n) der Beleuchtungseinheit eingesetzt wird. Dadurch lässt sich die Beleuchtungseinheit insgesamt besser warten, und das Risiko der Beschädigung der Beleuchtungseinheit während der Herstellung der Verkleidungseinrichtung wird deutlich gesenkt.

Die Verkabelung des Anschlusskabels 24, dessen Ankoppelung an einen Stecker 26, eine Steuereinheit und dergleichen kann in jeder der Ausführungsformen erfolgen, nachdem die vollständige Verkleidungseinrichtung hergestellt ist. Anschließend wird die Verkleidungseinrichtung in dem Kraftfahrzeug eingebaut, z. B. als Dachhimmel, Seitenverkleidung oder dergleichen.

Es versteht sich, dass die beschriebenen Details der Ausführungsbeispiele nicht notwendig in allen Ausgestaltungen der Erfindung enthalten sein müssen. Einzelne Merkmale können weggelassen oder ausgetauscht werden, sofern sie nicht zur Lösung der erfindungsgemäßen Aufgabe notwendig sind.

### Bezugszeichenliste

- 10: Verkleidungseinrichtung
- 12: Beleuchtungseinheiten
- 14: Träger
- 16: Vertiefung
- 16': Boden der Vertiefung
- 18: Beleuchtungseinheiten
- 20: Deckschicht
- 22, 22': Durchbruch
- 24: Anschlusskabel
- 26: Stecker
- 28: Kabelbaum
- 30: Grundmaterial der Deckschicht
- 32: Deckmaterial der Deckschicht
- 34: Lichtquelle
- 36: Lichtleiter
- 36a: Ausnehmungen
- 38: Reflektorfilm
- 40: Diffusor-Film
- 42: flexible Schaltungsplatte
- 44: Klebeschicht
- 46: Maskierungselement
- 48: Maskierungselement
- 50: Streumuster
- 52: Klebebänder
- 54: Schutzfolie
- 56: Oberform
- 58: Unterform
- 60: Material-Rohling
- 62: PUR-Schaum-Platten
- 64: Glasfasermatte
- 66: Klebeschicht
- 68: Weichzeichnerschicht
- 70: Wasserstrahl
- 72: Klebeschicht
- 74: Oberform
- 76, 76': Unterform
- 78: Oberform
- 80: Unterform

## Patentansprüche

1. Verkleidungseinrichtung für ein Kraftfahrzeug mit integriertem Beleuchtungssystem, welche umfasst:
einen Träger (14) mit einer B-Seite und einer C-Seite, wobei in die B-Seite des Trägers (14) eine Vertiefung (16) mit einem Boden (16') eingearbeitet ist und der Träger (14) einen Durchbruch (22) im Bereich oder in der Nähe des Bodens der Vertiefung (16) aufweist,
eine flächige Beleuchtungseinheit (18), die in der Vertiefung (16) auf der B-Seite des Trägers (14) bündig zu liegen kommt und ein Anschlusskabel (24) aufweist, das durch den Durchbruch (22) hindurch zur C-Seite des Trägers (14) geführt ist, so dass sich auf der B-Seite des Trägers (14) eine kontinuierliche oder im wesentlichen kontinuierliche ebene Oberfläche des Trägers (14) mit der Beleuchtungseinheit (18) ergibt, und
eine Deckschicht (20), die auf der B-Seite des Trägers (14) die flächige Beleuchtungseinheit und wenigstens einen Teil der Oberfläche des Trägers (14) überdeckt und eine A-Seite der Verkleidungseinrichtung bildet, wobei die Deckschicht (20) durchlässig für das von der Beleuchtungseinheit (18) ausgesandte Licht ist,
**dadurch gekennzeichnet, dass** die Beleuchtungseinheit (18) wenigstens eine punktförmige Lichtquelle (34), insbesondere eine LED, und einen flächigen Lichtleiter (36), insbesondere eine transparente Kunststofffolie, umfasst und dass der Durchbruch in dem Träger ausreichend groß bemessen ist, so dass die Lichtquelle (34) von der C-Seite des Trägers in diesen eingebracht werden kann.

2. Verkleidungseinrichtung nach Anspruch 1, **dadurch gekennzeichnet, dass** die Dicke der flächigen Beleuchtungseinheit gleich der Tiefe der Vertiefung ist.

3. Verkleidungseinrichtung nach Anspruch 1 oder 2, **dadurch gekennzeichnet, dass** die flächige Beleuchtungseinheit plattenförmig ist.

4. Verkleidungseinrichtung nach einem der vorangehenden Ansprüche, **dadurch gekennzeichnet, dass** die Beleuchtungseinheit (18) wenigstens teilweise auf einer gedruckten Schaltungsplatte angeordnet ist.

5. Verkleidungseinrichtung nach einem der vorangehenden Ansprüche, **dadurch gekennzeichnet, dass** die Beleuchtungseinheit (18) einen gedruckten Reflektor (38) und/oder einen gedruckten Diffusor (40) umfasst.

6. Verkleidungseinrichtung nach einem der vorangehenden Ansprüche, **dadurch gekennzeichnet, dass** die Beleuchtungseinrichtung (18) eine Maskierungsschicht (46, 48) zur Steuerung der Lichtabgabe aufweist.

7. Verkleidungseinrichtung nach einem der vorangehenden Ansprüche, **dadurch gekennzeichnet, dass** die Beleuchtungseinheit (18) wenigstens teilweise in die Vertiefung (16) eingeklebt ist.

8. Verkleidungseinrichtung nach einem der vorangehenden Ansprüche, **dadurch gekennzeichnet, dass** der Träger (14) mehrere Vertiefungen (16) aufweist, in die entsprechende Beleuchtungseinheiten (18) oder Teile von Beleuchtungseinheiten (18) eingebracht sind, und dass die Lichtquellen der Beleuchtungseinheiten (18) auf der C-Seite des Trägers (14) in Reihe und/oder parallel geschaltet sind.

9. Verfahren zum Herstellen einer Verkleidungseinrichtung nach einem der vorangehenden Ansprüche, **dadurch gekennzeichnet, dass** die Vertiefung (16) in dem Träger (14) durch Pressen in einem Presswerkzeug ausgebildet wird und anschließend der Durchbruch (22) in dem Träger (14) im Bereich oder in der Nähe der Vertiefung (16) hergestellt wird.

10. Verfahren zum Herstellen einer Verkleidungseinrichtung nach einem der Ansprüche 1 bis 8, **dadurch gekennzeichnet, dass** zunächst der Durchbruch (22) in dem Träger (14) hergestellt wird, und anschließend wenigstens der Lichtleiter der Beleuchtungseinheit (18) auf den Träger (14) aufgebracht wird und der Träger (14) mit dem darauf aufgebrachten Lichtleiter (36) durch Pressen in einem Presswerkzeug derart verformt wird, dass der Lichtleiter (36) in den Träger (14) zu liegen kommt.

11. Verfahren nach Anspruch 9 oder 10, **dadurch gekennzeichnet, dass** das Anschlusskabel (24) durch den Durchbruch (22) von der B-Seite zu der C-Seite des Trägers (14) geführt und die Beleuchtungseinheit auf den Träger aufgebracht wird, bevor die Deckschicht (20) auf die Beleuchtungseinheit (18) und wenigstens einen Teil des Trägers (14) aufgebracht wird.

12. Verfahren nach Anspruch 9 oder 10, **dadurch gekennzeichnet, dass** er Lichtleiter auf den Träger aufgebracht und die Deckschicht (20) auf den Lichtleiter (36) und wenigstens einen Teil des Trägers (14) aufgebracht wird, bevor die Lichtquelle (34) in den Träger eingebracht und mit dem Lichtleiter gekoppelt wird.

13. Verwendung einer Verkleidungseinrichtung nach einem der Ansprüche 1 bis 8 als Dachhimmel in einem Kraftfahrzeug.

## Claims

1. Trim means for a motor vehicle with integrated lighting system, which comprises:
a carrier (14) having a B side and a C side, wherein a recess (16) having a bottom (16') is formed into the B side of the carrier (14) and the carrier (14) has an aperture (22) in the region of or in the vicinity of the bottom of the recess (16),
a planar lighting unit (18), which comes to lie flush in the recess (16) on the B side of the carrier (14) and has a connection cable (24), which is guided through the aperture (22) to the C side of the carrier (14), so that on the B side of the carrier (14) a continuous or substantially continuous planar surface of the carrier (14) with the lighting unit (18) is created, and
a cover layer (20), which on the B side of the carrier (14) covers the planar lighting unit and at least a portion of the surface of the carrier (14) and forms an A side of the trim means, wherein the cover layer (20) is permeable to the light emitted from the lighting unit (18);
**characterized in that** the lighting unit (18) comprises at least one point-shaped light source (34), in particular an LED, and a planar light conductor (36), in particular a transparent plastic film, and
the aperture in the carrier is dimensioned sufficiently large so that the light source (34) can be inserted from the C side of the carrier.

2. Trim means according to Claim 1, **characterized in that** the thickness of the planar light unit is the same as the depth of the recess.

3. Trim means according to Claim 1 or Claim 2, **characterized in that** the planar light unit has the shape of a plate.

4. Trim means according to one of the preceding claims, **characterized in that** the lighting unit (18) is arranged at least partially on a printed circuit board.

5. Trim means according to one of the preceding claims, **characterized in that** the lighting unit (18) comprises at least one of: a printed reflector (38) and a printed diffuser (40).

6. Trim means according to one of the preceding claims, **characterized in that** the lighting arrangement (18) has a masking layer (46, 48) for controlling the emission of light.

7. Trim means according to one of the preceding claims, **characterized in that** the lighting unit (18) is at least partially bonded into the recess (16).

8. Trim means according to one of the preceding claims, **characterized in that** the carrier (14) has several recesses (16), into which corresponding lighting units (18) or portions of lighting units (18) are introduced, and that the light sources of the lighting units (18) are connected in series or in parallel or in series and parallel on the C side of the carrier (14).

9. Method for the manufacture of a trim means according to one of the preceding claims, **characterized in that** the recess (16) is formed in the carrier (14) by pressing in a pressing tool, and subsequently the aperture (22) is produced in the carrier (14) in the region of or in the vicinity of the recess (16).

10. Method for the manufacture of a trim means according to one of Claims 1 to 8, **characterized in that** first the aperture (22) is produced in the carrier (14), and subsequently at least the light conductor of the lighting unit (18) is applied onto the carrier (14) and the carrier (14) with the light conductor (36) applied thereon is deformed by pressing in a pressing tool such that the light conductor (36) is pressed into the carrier (14) and comes to lie in the recess (16) thereby formed in the carrier (14).

11. Method according to Claim 9 or 10, **characterized in that** the connection cable (24) is guided through the aperture (22) from the B side to the C side of the carrier (14), and the lighting unit is applied to the carrier, before the cover layer (20) is applied onto the lighting unit (18) and at least a portion of the carrier (14).

12. Method according to Claim 9 or 10, **characterized in that** the light conductor is applied onto the carrier and the cover layer (20) is applied onto the light conductor (36) and at least a portion of the carrier (14), before the light source (34) is introduced into the carrier and is coupled with the light conductor.

13. Use of a trim means according to one of Claims 1 to 8 as roof lining in a motor vehicle.

## Revendications

1. Dispositif de panneau d'habillage pour véhicule automobile avec système d'éclairage intégré, qui comprend :
un support (14) avec un côté B et un côté C, une cavité (16) ayant un fond (16') étant pratiquée dans le côté B du support (14) et le support (14) présentant un percement (22) dans la zone ou à proximité du fond de la cavité (16),
une unité d'éclairage plate (18) qui vient reposer en affleurement dans la cavité (16) sur le côté B du support (14) et présente un câble de raccordement (24) qui est amené au côté C du support (14) en passant au travers du percement (22) de telle sorte qu'on obtient sur le côté B du support (14) une surface du support (14) avec l'unité d'éclairage (18) qui est plane de façon continue ou sensiblement continue, et
une couche de couverture (20) qui recouvre l'unité d'éclairage plate et au moins une partie de la surface du support (14) sur le côté B du support (14) et qui forme un côté A du dispositif de panneau d'habillage, la couche de couverture (20) étant perméable pour la lumière émise par l'unité d'éclairage (18),
**caractérisé en ce que** l'unité d'éclairage (18) comprend au moins une source de lumière en forme de point (34), en particulier une LED, et un guide de lumière plat (36), en particulier une feuille de plastique transparente, et **en ce que** le percement du support est d'une taille suffisante pour que la source de lumière (34) puisse y être insérée depuis le côté C du support.

2. Dispositif de panneau d'habillage selon la revendication 1, **caractérisé en ce que** l'épaisseur de l'unité d'éclairage plate est identique à la profondeur de la cavité.

3. Dispositif de panneau d'habillage selon la revendication 1 ou 2, **caractérisé en ce que** l'unité d'éclairage plate est réalisée en forme de plaque.

4. Dispositif de panneau d'habillage selon l'une des revendications précédentes, **caractérisé en ce que** l'unité d'éclairage (18) est agencée au moins partiellement sur une carte à circuits imprimés.

5. Dispositif de panneau d'habillage selon l'une des revendications précédentes, **caractérisé en ce que** l'unité d'éclairage (18) comprend un réflecteur imprimé (38) et/ou un diffuseur imprimé (40).

6. Dispositif de panneau d'habillage selon l'une des revendications précédentes, **caractérisé en ce que** le dispositif d'éclairage (18) présente une couche de masquage (46, 48) pour diriger l'émission de lumière.

7. Dispositif de panneau d'habillage selon l'une des revendications précédentes, **caractérisé en ce que** l'unité d'éclairage (18) est collée au moins partiellement dans la cavité (16).

8. Dispositif de panneau d'habillage selon l'une des revendications précédentes, **caractérisé en ce que** le support (14) présente plusieurs cavités (16) dans lesquelles des unités d'éclairage (18) ou des parties d'unités d'éclairage (18) correspondantes sont insérées et **en ce que** les sources de lumière des unités d'éclairage (18) sont montées en série et/ou en parallèle sur le côté C du support (14).

9. Procédé de fabrication d'un dispositif de panneau d'éclairage selon l'une des revendications précédentes, **caractérisé en ce que** la cavité (16) est réalisée dans le support (14) par pressage dans un outil de pressage et le percement (22) est ensuite pratiqué dans le support (14) dans la zone ou à proximité de la cavité (16).

10. Procédé de fabrication d'un dispositif de panneau d'éclairage selon l'une des revendications 1 à 8, **caractérisé en ce que** le percement (22) est d'abord pratiqué dans le support (14), et ensuite, au moins le guide de lumière de l'unité d'éclairage (18) est installé sur le support (14) et le support (14) est façonné dans un outil de pressage, avec le guide de lumière (36) installé, de telle sorte que le guide de lumière (36) vient à reposer dans le support (14).

11. Procédé selon la revendication 9 ou 10, **caractérisé en ce que** le câble de raccordement (24) est amené du côté B au côté C du support (14) au travers du percement (22) et l'unité d'éclairage est installée sur le support avant que la couche de couverture (20) soit installée sur l'unité d'éclairage (18) et au moins une partie du support (14).

12. Procédé selon la revendication 9 ou 10, **caractérisé en ce que** le guide de lumière est installé sur le support et la couche de couverture (20) est installée sur le guide de lumière (36) et au moins une partie du support (14) avant que la source de lumière (34) soit installée dans le support et couplée avec le guide de lumière.

13. Utilisation d'un dispositif de panneau d'habillage selon l'une des revendications 1 à 8 en tant que garniture de pavillon dans un véhicule automobile.
